Europäisches Patentamt

European Patent Office

Office européen des brevets

(19)

(11) Veröffentlichungsnummer: **0 000 221**
B.1

(12)

# EUROPÄISCHE PATENTSCHRIFT

(45) Veröffentlichungstag der Patentschrift:
21.04.82

(21) Anmeldenummer: 78200042.6

(22) Anmeldetag: 14.06.78

(51) Int. Cl.³: **D 21 H 3/40,** C 08 F 222/06,
C 08 F 8/32 // (C08F222/06,
232/06)

(54) Anionische Papieroberflächenleimungsmittel.

(30) Priorität: 18.06.77 DE 2727510

(43) Veröffentlichungstag der Anmeldung:
10.01.79 Patentblatt 79/1

(45) Bekanntmachung des Hinweises auf die Patenterteilung:
21.04.82 Patentblatt 82/16

(84) Benannte Vertragsstaaten:
BE CH DE FR GB LU NL SE

(56) Entgegenhaltungen:
FR-A-2 335 535

(73) Patentinhaber: CHEMISCHE WERKE HÜLS AG,
Postfach 1320, D-4370 Marl 1 (DE)

(72) Erfinder: Peterlein, Karl, Dr., Vehrenbergstrasse 133,
D-4390 Gladbeck (DE)
Erfinder: Schülde, Felix, Dr., Am Gecksbach 20,
D-4273 Wulfen (DE)
Erfinder: Diedrich, Klaus M., Dr., Vehrenbergstrasse 109,
D-4390 Gladbeck (DE)
Erfinder: Kulisch, Volker W., Tunnelstrasse 55,
D-4390 Gladbeck (DE)

(74) Vertreter: Steil, Hanna, Dipl.-Chem. et al, RSP
PATENTE-PB 40 Holsterhauser
Strasse 160 Postfach 2840, D-4690 Herne 2 (DE)

## Anionische Papieroberflächenleimungsmittel

### Beschreibung und Beispiele

Die Erfindung betrifft ein Verfahren zur Oberflächenleimung von Papier unter Verwendung statistischer Copolymerisate aus Maleinsäureanhydrid und Dicyclopentadien bzw. von Umsetzungsprodukten dieser Copolymerisate.

Es ist allgemein bekannt, Papier in der Masse unter Verwendung von Kolophoniumharzseifen und Aluminium-Ionen zu leimen. Neben den bekannten Leimen auf Kolophoniumharzbasis haben sich auch Lösungen oder Dispersionen von polymeren Verbindungen zur Papierleimung bewährt. Der Vorteil solcher Kunststoffleime besteht u. a. darin, daß sie auch auf die bereits fertige Papieroberfläche aufgebracht werden können, während ein normaler Harzleim mit Aluminium-Ionen auf die Papierfaser ausgefällt wird.

Die Verwendung von synthetischen Polymerleimen ermöglicht eine Papierleimung ohne Zusatz von Metallsalzen. Als derartige Leimungsmittel sind Lösungen oder Dispersionen von statistischen Copolymerisaten aus ungesättigten Carbonsäuren bzw. deren Derivaten mit bestimmten äthylenisch ungesättigten Verbindungen geeignet. Der Leimungsgrad der mit diesen, dem Stand der Technik entsprechenden, Copolymerisaten geleimten Papiere entspricht nicht in allen Fällen, z. B. bei der Leimung von in der Masse vorgeleimtem Papier, den technischen Erfordernissen.

Aus der DE-A-1 621 693 ist bekannt, daß für die Papieroberflächenleimung bernsteinsäureimidgruppenhaltige Copolymere verwendet werden können, bei deren Herstellung als Comonomere vinyloge Verbindungen eingesetzt werden. Als mögliches Vinyloges wird u. a. Dicyclopentadien genannt. Um die beschriebenen Copolymerisate für die Papierleimung löslich zu machen, müssen diese mit Ammoniak, Alkalilaugen oder Aminen umgesetzt werden. Wegen der enthaltenen Imidgruppen entsteht hierbei eine Vielzahl von Abkömmlingen.

Bei dem vorgenannten Verfahren ist es zur Herstellung der Imidgruppen notwendig, entweder Maleinsäureanhydrid in Maleinsäureimid zu überführen oder bei einem aus Maleinsäureanhydrid und Vinylogen hergestellten Copolymerisat nachträglich die Imidgruppierungen auszubilden. Aus wirtschaftlichem Interesse ist es jedoch wünschenswert, die Herstellung der zur Papierleimung verwendeten Copolymerisate nach Möglichkeit zu vereinfachen und aus Gründen besserer Reproduzierbarkeit die Zahl der Abkömmlinge beim Löslichmachen in Grenzen zu halten.

Es wurde nun überraschenderweise gefunden, daß Copolymerisate aus Maleinsäureanhydrid und Dicyclopentadien, die keine Imidstruktur enthalten — und mithin bei der Herstellung einen aufwendigen Arbeitsgang einsparen — hochwirksame Papierleimungsmittel darstellen, die in der Wirksamkeit den vorstehend beschriebenen gleichwertig oder überlegen sind und sowohl auf ungeleimtem wie auch in der Masse vorgeleimtem Papier ausgezeichnete Leimungswirkung besitzen. Die Verwendung derartiger Copolymerisate ist für die Papierleimung bisher nicht bekannt.

Gegenstand der Erfindung sind daher anionische Oberflächenleimungsmittel auf Basis wäßriger Lösungen von statistischen Maleinsäureanhydrid-Copolymerisaten, welche dadurch gekennzeichnet sind, daß sie aus Maleinsäureanhydrid und Dicyclopentadien hergestellt sind.

Die erfindungsgemäßen statistischen Copolymerisate erhält man in an sich bekannter Weise, in dem man die Polymerisation als Suspensions- oder Lösungspolymerisation in aliphatischen oder aromatischen Kohlenwasserstoffen, wie z. B. Toluol oder Xylol, in Alkoholen, wie z. B. Äthylenglykol oder Äthylglykol, oder in Äthern, wie z. B. Äthylenglykoldimethyläther oder Dioxan bei Temperaturen zwischen 60 und 150° C, vorzugsweise zwischen 70 und 90° C, in Gegenwart von radikalischen Initiatoren vornimmt. Als Initiatoren können Azoverbindungen, Peroxide oder Hydroperoxide dienen, z. B. Azobisisobutyronitril, Di-Benzoylperoxid oder Di-tert.-Butyl-peroxid. Die Initiatoren verwendet man vorzugsweise in Mengen von 2 bis 6 Gewichtsprozent der Comonomeren.

Um die erfindungsgemäßen Copolymerisate, welche Anhydridgruppen enthalten, wasserlöslich zu machen, überführt man sie mit Basen in ihre Salze. Dabei brauchen jedoch erfahrungsgemäß nicht alle Carboxylgruppen neutralisiert zu werden, da im allgemeinen ein Neutralisationsgrad von 80% — bezogen auf die Anzahl aller Carboxylgruppen — ausreicht. Als Kationen kommen vor allem Ammonium und/oder Mono-, Di- oder Trialkylammonium mit insgesamt bis zu 6 Kohlenstoffatomen sowie Alkaliionen in Betracht. Darüber hinaus kann man die erfindungsgemäßen Copolymerisate in Form ihrer Umsetzungsprodukte mit Ammoniak oder primären aliphatischen oder aromatischen Aminen, wie z. B. Äthylamin oder Anilin, oder sekundären Aminen, wie z. B. Diäthylamin, Morpholin oder Pyrrolidin und/oder aliphatischen Alkoholen, verwenden.

Diese Umsetzungsprodukte besitzen ebenfalls ausgezeichnete Papierleimungseigenschaften.

Die für die Papierleimung benötigte Menge der erfindungsgemäßen Copolymerisate liegt zwischen 0,01 und 3, vorzugsweise zwischen 0,1 und 1 Gewichtsprozent, bezogen auf das Papiergewicht.

Die als Papierleimungsmittel im Sinne der Erfindung eingesetzten Copolymerisate können mit für die Papierleimung gebräuchlichen anionischen Stärken kombiniert werden. Die so erhaltenen Leimflotten können erforderlichenfalls mit den üblichen Zusätzen versetzt werden. Die Verarbeitung kann nach den in der Papierherstellung üblichen Technologien erfolgen.

### Beispiel 1

### Leimungsmittel I

Maleinsäureanhydrid und Dicyclopentadien werden in Toluol als Lösungsmittel und in Gegenwart von Benzoylperoxid als Initiator im molaren Verhältnis 1:1 polymerisiert. Zur Umsetzung zum Halbamid wird in die erhaltene Polymerisationsaufschlämmung gasförmiges Ammoniak eingeleitet, bis der erforderliche Stickstoffwert erreicht ist. Nach Abtreiben der Lösungsmittelreste wird ein weißes Pulver mit einem Erweichungspunkt über 270° C erhalten.

### Leimungsmittel II

### (Vergleich)

Ein dem Stand der Technik entsprechendes, als Halbamid vorliegendes Copolymerisat aus Maleinsäureanhydrid und Styrol wird als Vergleichssubstanz eingesetzt.

Die Leimungsmittel I bis II werden mit einer anionischen Maisstärke, die im Handel unter der Bezeichnung Amisol 5591® der Firma Maizena erhältlich ist, zu 10%igen Leimflotten kombiniert. Das Festkörperverhältnis von Leimungsmittel zu Stärke beträgt 1,5 : 8,5. Diese Flotten werden auf einer Laborleimpresse auf ein ungeleimtes 80- g-Papier so appliziert, daß die aufgebrachte Menge an Leimungsmittel 0,6% des Papiergewichtes beträgt. Die Trocknung des Papiers in der Leimpresse erfolgt bei 140 – 160° C in ca. 5 sec. Die erzielten Leimungswerte enthält Tabelle 1.

Tabelle 1

| | Leimungsmittel | | |
| --- | --- | --- | --- |
| | I | II | ohne |
| Wasseraufnahme (DIN 53 132) $sec \cdot g/m^2$ | 10<br>12 | <1<br>10 | <1<br>89 |
| Leimungsgrad (DIN 53 145) sec | 1160 | 157 | <1 |
| Saughöhe, 10 min (DIN 53 106) mm | <1 | 8 | 44 |
| Oberflächenfestigkeit (Dennison-Test) | 16 | 14 | 11 |

Die Wirksamkeit der erfindungsgemäßen Leimungsmittel ist überzeugend ersichtlich.

### Beispiel 2

Analog dem Beispiel 1 werden die Leimungsmittel I—II zu Leimflotten formuliert und auf einer Laborleimpresse appliziert, mit dem Unterschied, daß ein mit 0,8% Harzleim in der Masse vorgeleimtes Papier verwendet wird. Die erzielten Leimungswerte enthält Tabelle 2. Es ist der Vorteil des erfindungsgemäßen Leimungsmittels I gegenüber dem Vergleichsleimungsmittel II deutlich erkennbar.

Tabelle 2

| | Leimungsmittel | | |
| --- | --- | --- | --- |
| | I | II | ohne |
| Wasseraufnahme (DIN 53 152) $sec \cdot g/m^2$ | 300<br>25 | 300<br>25 | 300<br>27 |
| Leimungsgrad (DIN 53 145) sec | 924 | 461 | 418 |
| Saughöhe, 10 min (DIN 53 106) mm | <1 | <1 | <1 |
| Oberflächenfestigkeit (Dennison-Test) | 16 | 13 | 13 |

## Patentansprüche

1. Anionische Papieroberflächenleimungsmittel auf der Basis wäßriger Lösungen von statistischen Maleinsäureanhydrid-Copolymerisaten, dadurch gekennzeichnet, daß Maleinsäureanhydrid-Copolymerisate aus Maleinsäureanhydrid und Dicyclopentadien, in Form der Salze oder Umsetzungsprodukte mit Ammoniak, primären aliphatischen oder aromatischen Aminen oder sekundären Aminen und/oder aliphatischen Alkoholen, eingesetzt werden.

2. Verwendung der Verbindungen gemäß Anspruch 1 in Mengen von 0,01 bis 3 Gew.-%, vorzugsweise 0,1 bis 1 Gew.-%, bezogen auf das Papiergewicht, zum Leimen von Papier.

## Claims

1. Anionic paper surface sizing agents based on aqueous solutions of statistical malein acid anhydride copolymers, characterized in that malein acid anhydride-copolymers from malein acid anhydride and dicyclopentadiene are applied in form of the salts or reaction products with ammonia, primary aliphatic or aromatic amines or secondary amines and/or aliphatic alcohols.

2. Use of the compounds according to Claim 1, in amounts of 0.01 to 3% by weight, preferably 0.1 to 1% by weight, related to the paper weight, for the glue of paper.

## Revendications

1. Agent anionique pour le collage en surface de papiers, à base de solutions aqueuses de copolymères statistiques d'anhydride maléique, caractérisé en ce que l'on utilise des copolymères d'anhydride maléique et de dicyclopentadiène, sous forme de leurs sels ou de produits de substitution avec de l'ammoniac, des amines primaires, aliphatiques ou aromatiques, ou des amines secondaires et/ou des alcools aliphatiques.

2. Utilisation des composés suivant la revendication 1, caractérisée en ce qu'on les met en œuvre pour coller du papier dans des proportions de 0,01 à 3, et de préférence 0,1 à 1% en poids, calculé sur le poids du papier traité.